(19) Europäisches Patentamt
European Patent Office
Office européen des brevets

(11) **EP 2 589 924 B1**

(12) **EUROPÄISCHE PATENTSCHRIFT**

(45) Veröffentlichungstag und Bekanntmachung des Hinweises auf die Patenterteilung:
**20.04.2016  Patentblatt 2016/16**

(51) Int Cl.:
**G01H 9/00** (2006.01)

(21) Anmeldenummer: **12188513.1**

(22) Anmeldetag: **15.10.2012**

(54) **Vorrichtung und Verfahren zur interferometrischen Vermessung eines Objekts**

Device and method for interferometric measuring of an object

Dispositif et procédé destinés à la mesure interférométrique d'un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.11.2011  DE 102011085599**

(43) Veröffentlichungstag der Anmeldung:
**08.05.2013  Patentblatt 2013/19**

(73) Patentinhaber: **Polytec GmbH**
**76337 Waldbronn (DE)**

(72) Erfinder:
• **Schüssler, Matthias**
**76337 Waldbronn (DE)**
• **Rembe, Christian**
**76337 Waldbronn (DE)**
• **Dräbenstedt, Alexander**
**76275 Ettlingen (DE)**
• **Kowarsch, Robert**
**76337 Waldbronn (DE)**
• **Ochs, Wanja**
**76185 Karlsruhe (DE)**

(74) Vertreter: **Lemcke, Brommer & Partner**
**Patentanwälte Partnerschaft mbB**
**Bismarckstraße 16**
**76133 Karlsruhe (DE)**

(56) Entgegenhaltungen:
**US-A- 4 005 936**       **US-A1- 2005 237 533**
**US-A1- 2008 285 049**

• **Y. FU, M. GUO, P.B. PHUA: "Cross-talk prevention in optical dynamic measurement", OPTICS AND LASERS IN ENGINEERING, Bd. 50, Nr. 4, 16. Juli 2011 (2011-07-16), Seiten 547-555, XP028123776, ISSN: 0143-8166, DOI: 10.1016/J.OPTLASENG.2011.06.003 [gefunden am 2011-06-22]**

EP 2 589 924 B1

**Beschreibung**

Die Erfindung betrifft eine Vorrichtung zur interferometrischen Vermessung eines Objekts gemäß Oberbegriff des Anspruchs 1 sowie ein Verfahren zur interferometrischen Vermessung eines Objekts gemäß Oberbegriff des Anspruchs 12.

Vorrichtungen und Verfahren zur interferometrischen Vermessung eines Objekts sind in verschiedenen Ausgestaltungen bekannt: So ist beispielsweise ein typischer Aufbau als Laser-Doppler-Vibrometer bekannt, welche einen Laser als Strahlungsquelle zur Erzeugung eines Ausgangsstrahls umfasst, eine Strahlteilervorrichtung zur Aufteilung des Ausgangsstrahls in einen Mess- und einen Referenzstrahl, eine optische Überlagerungsvorrichtung und einen ersten Detektor.

Der Messstrahl wird auf einen Messpunkt auf dem Objekt geleitet und der zumindest teilweise reflektierte Messstrahl wird zusammen mit dem Referenzstrahl auf einer Detektorfläche des Detektors überlagert, so dass durch Auswertung des Interferenzsignals beispielsweise auf eine Bewegung der Objektoberfläche am Messpunkt in Richtung der optischen Achse des Messstrahls rückgeschlossen werden kann.

Darüber hinaus sind Anordnungen bekannt, welche einen heterodynen Aufbau aufweisen, so dass sich durch eine Phasendemodulation im Messlicht auf die Auslenkungsrichtung der vermessenen Oberfläche schließen lässt.

Um in zwei oder drei Dimensionen Schwingungsinformation zu erhalten, ist es bekannt, die Messstrahlen von drei Laser-Doppler-Vibrometern so zu führen, dass die Messstrahlen jeweils schräg zueinander in etwa auf einen Messpunkt auf dem Objekt auftreffen.

Der vorliegenden Erfindung liegt die Aufgabe zugrunde, eine Vorrichtung zur interferometrischen Vermessung eines Objekts und ein Verfahren zur interferometrischen Vermessung eines Objekts zu schaffen, so dass die Ermittlung von zusätzlicher Information gegenüber den vorbekannten Einstrahl-Laser-Doppler-Vibrometern möglich ist. Gleichzeitig soll ein robuster Aufbau und eine hohe Messgenauigkeit erzielt werden.

Gelöst ist diese Aufgabe durch eine Vorrichtung zur interferometrischen Vermessung eines Objekts gemäß Anspruch 1 sowie durch ein Verfahren zur interferometrischen Vermessung eines Objekts gemäß Anspruch 12. Vorzugsweise Ausgestaltungen der erfindungsgemäßen Vorrichtung finden sich in den Ansprüchen 2 bis 11; vorzugsweise Ausgestaltungen des erfindungsgemäßen Verfahrens finden sich in den Ansprüchen 13 bis 15. Hiermit wird der Wortlaut sämtlicher Ansprüche explizit per Referenz in die Beschreibung einbezogen.

Die erfindungsgemäße Vorrichtung zur interferometrischen Vermessung eines Objekts umfasst eine Strahlungsquelle zur Erzeugung eines Ausgangsstrahls, eine Strahlteilervorrichtung zur Aufteilung des Ausgangsstrahls in einen Mess- und einen ersten Referenzstrahl, eine optische Überlagerungsvorrichtung und einen ersten Detektor.

Die Überlagerungsvorrichtung und der erste Detektor sind derart zusammenwirkend ausgebildet, dass der von dem Objekt zumindest teilweise reflektierte Messstrahl und der erste Referenzstrahl auf mindestens einer Detektorfläche des ersten Detektors überlagert sind.

Hinsichtlich dieses Grundaufbaus entspricht die erfindungsgemäße Vorrichtung somit vorbekannten Interferometern, insbesondere weisen typische, aus dem Stand der Technik bekannte, Laser-Doppler-Vibrometer solch einen Aufbau auf.

Wesentlich ist, dass bei der erfindungsgemäßen Vorrichtung die Strahlteilervorrichtung ausgebildet ist zur Aufteilung des Ausgangsstrahls in einen Messstrahl, einen ersten Referenzstrahl und mindestens einen zweiten Referenzstrahl. Weiterhin weist die erfindungsgemäße Vorrichtung mindestens einen zweiten Detektor auf und die Überlagerungsvorrichtung und der zweite Detektor sind derart zusammenwirkend ausgebildet, dass der vom dem Objekt zumindest teilweise gestreute Messstrahl und der zweite Referenzstrahl auf mindestens einer Detektorfläche des zweiten Detektors überlagert sind.

Die erfindungsgemäße Vorrichtung weist somit mindestens zwei Detektoren auf, auf denen jeweils Strahlen zur interferometrischen Auswertung überlagert werden. Im Gegensatz zu vorbekannten Vorrichtungen weist die erfindungsgemäße Vorrichtung jedoch lediglich einen Messstrahl auf, der einerseits hinsichtlich des zumindest teilweise reflektierten Messstrahls durch den ersten Detektor und andererseits hinsichtlich des zumindest teilweise von dem Objekt gestreuten Messstrahls durch den zweiten Detektor ausgewertet wird.

Die erfindungsgemäße Vorrichtung weist somit einen grundsätzlich verschiedenen Aufbau auf, da vorbekannte Vorrichtungen für jeden Detektor jeweils einen eigenen Messstrahl aufweisen.

Die Erfindung ist insbesondere auf folgende Erkenntnis des Anmelders begründet:

Bei vorbekannten Vorrichtungen, bei denen mehrere Laser-Doppler-Vibrometer kombiniert werden, so dass beispielsweise bei Verwendung von drei Vibrometern drei Messstrahlen auf dem Objekt auftreffen, sollten optimalerweise die Foki der Messstrahlen exakt übereinander liegen, da sonst ein Messfehler bei Drehungen des Objekts um das Messpunktzentrum entsteht.

Bei Überlagerung der Messstrahlen auf dem Objekt, d. h. exakter Übereinstimmung der Messpunkte der mehreren Vibrometern, wird aber auch von jedem einzelnen Sensor das Messlicht der anderen beiden Vibrometern empfangen, da Streulicht nicht nur vom Messlicht des betrachteten Kanals, sondern auch Messlicht von den anderen Kanälen eingesammelt und auf dem Detektor zur Interferenz gebracht wird (optisches Übersprechen). Da typischerweise die Frequenzen der verwendeten Laser innerhalb eines Frequenzabstandes, weicher durch die Summe aus einer Demodulationsbandbreite und einer heterodynen Frequenzverschiebung definiert ist, zusammenfallen, ergibt sich ein erheblicher störender Effekt, der bis zu einem totalen Ausfall der Messfähigkeit der Sensoren führen kann.

Umgeht man dieses Problem, indem die Messpunkte geringfügig örtlich nebeneinander liegen, so wird der vorgenannte Störeffekt verringert, jedoch nicht vollständig beseitigt.

Die vorbekannten Verfahren unter Verwendung mehrerer Vibrometer mit jeweils einem Messstrahl weisen grundsätzlich das Problem des optischen Übersprechens der Detektoren aufgrund eingekoppelten Messlichts der Messstrahlen der anderen Vibrometer auf.

Ein Verfahren zum Vermeiden des Übersprechens wird offenbart in "Cross-talk prevention in optical dynamic measurement" von Y.Fu et al. in Optics and Lasers in Engineering 50 (2012), S.54 -555. Ein weiteres Doppler Vibrometer wird in der US2005/0237533 beschriebene.

Im Stand der Technik besteht somit meist die Notwendigkeit, dass die Messpunkte der mehreren verwendeten Vibrometer auf dem Objekt örtlich nebeneinander liegen müssen, um ein optisches Übersprechen zumindest zu verringern. Hierdurch ist jedoch eine Grenze hinsichtlich des Messpunktdurchmessers gegeben, so dass typischerweise ein Messpunktdurchmesser von 35 $\mu$m nicht unterschritten werden kann. Es ist jedoch wünschenswert, mehrdimensionale Schwingungsinformation für Messpunktdurchmesser kleiner 35 $\mu$m, insbesondere kleiner 15 $\mu$m, weiter bevorzugt kleiner 5 $\mu$m zu erzielen. Bei der Lösung nach Stand der Technik misst man koaxial mit jedem Vibrometerkanal. Bei einem schrägen Auftreffen des Messstrahls liegt der Hauptteil der Leistung der Streulichtkeule um den reflektierten Anteil des Strahls. Der Detektionswinkel zur Achse der Streulichtkeule beträgt daher das Doppelte des Einfallswinkels. Da man für einen kleinen Fokusdurchmesser eine hohe numerische Apertur (NA) benötigt, bedingt die gewünschte Größe des Messpunkts jedes einzelnen Strahls einen Öffnungswingel des Messstrahls. Dieser Zusammenhang ist bei einer gleichmäßigen Ausleuchtung der Apertur des Mikroskopobjektivs (Austrittspupille) durch den Zusammenhang

$$d = 1.22 \frac{\lambda}{NA} \qquad \text{(Formel 0)}$$

gegeben, wobei *d* der Durchmesser des Fokus in [m], $\lambda$ die Wellenlänge des Messstrahls in [m] und *NA* die Numerische Apertur des Objektivs ist.

Da sich die Öffnungswinkel nicht überschneiden können, resultiert hieraus ein minimal möglicher Winkel zwischen den Strahlen. Untersuchungen des Anwenders haben gezeigt, dass es bei der Lösung des Stands der Technik die Empfindlichkeit eines schräg auftreffenden Vibrometerstrahls nicht mehr ausreichend für die meisten Oberflächen ist, wenn ein senkrecht auftreffender Vibrometerstrahl eingerichtet wird, da dann zwangsläufig der Einfallswinkel des schräg auftreffenden Vibrometers zu groß wird. Man muss daher bei beiden Vibrometern einen kleineren schrägen Winkel realisieren, damit der Einfallswinkel bei einem Vibrometer nicht zu groß wird.

Es ist daher in der Regel nicht möglich, bei Verwendung von mehreren Vibrometern einen der Messstrahlen senkrecht auf die Oberfläche der Probe zu richten. Dies wäre messtechnisch jedoch wünschenswert weil dann ein Kanal direkt die Bewegung in z-Richtung misst (Sollausrichtung des Messkopfes, die senkrecht zur vorgesehenen Lage der Messoberfläche ist), ist aufgrund der vorgenannten Streulichtproblematik bei den aus dem Stand der Technik bekannten Vorrichtungen jedoch nicht realisierbar bzw. führt durch zu wenig Licht zu einem zu hohen Rauschpegel bei der Signalauswertung bei den schräg messenden Detektoren.

Bei typischen aus dem Stand der Technik bekannten Aufbauten muss für jeden Messstrahl ein eigenes Objektiv verwendet werden, so dass kein Raum für ein weiteres Objektiv für eine Kamera zur Aufnahme eines ortsaufgelösten Messbildes vorliegt. Typischerweise muss daher bei den aus dem Stand der Technik bekannten Vorrichtungen eine Kamera mit Hilfe eines dichroitischen Strahlteilers über ein Objektiv eines der verwendeten Vibrometer eingekoppelt werden, um den Messpunkt für Justagezwecke dem Benutzer anzeigen zu können. Da das Objektiv aus den vorgenannten Gründen bei den vorbekannten Vorrichtungen einen schrägen Einfallswinkel zur Oberfläche des Objekts aufweist, ist auch das Bild der Kamera verzerrt und insbesondere nicht gleichmäßig (hinsichtlich verschiedener Ortspositionen) scharf. Hierdurch ist es insbesondere schwierig, eine scannende Messung unter Verwendung eines x-y-Tisches, welcher das Objekt verschiebt, durchzuführen.

Die erfindungsgemäße Vorrichtung und das nachfolgend erfindungsgemäße Verfahren vermeiden all die vorgenannten Nachteile. Da lediglich ein Messstrahl ausgehend von der Vorrichtung auf die zu vermessende Oberfläche des Objekts gerichtet wird und einerseits ein reflektierter Anteil des Messstrahls und andererseits mindestens ein gestreuter Anteil des Messstrahls mit jeweils einem Detektor ausgewertet wird, kann somit Schwingungsinformation in mehreren Dimensionen ermittelt werden ohne dass - wie bei den vorbekannten Vorrichtungen - mehrere Messstrahlen auf das Objekt gerichtet werden müssen.

Hierdurch sind die vorgenannten Probleme durch optisches Übersprechen und entsprechende Schwierigkeiten bei der Signalauswertung, Platzprobleme hinsichtlich verwendeter Objekte zur Fokussierung des Messstrahls auf das Objekt sowie Begrenzungen hinsichtlich möglicher Einfallswinkel des Messstrahls auf das Objekt beseitigt.

Die vorbeschriebene Aufgabe ist ebenfalls gelöst durch das erfindungsgemäße Verfahren zur interferometrischen Vermessung eines Objekts, welches folgende Verfahrensschritte umfasst:

In einem Verfahrensschritt A wird ein Ausgangsstrahl mittels einer Lichtquelle erzeugt, in einem Verfahrensschritt B erfolgt ein Aufteilen des Ausgangsstrahls mittels einer Strahlteilervorrichtung in einen Mess- und einem ersten Referenzstrahl. In einem Verfahrensschritt C erfolgt ein Überlagern des ersten Referenzstrahls und des in Anspruch 12 und des zumindest teilweise von dem Objekt reflektierten Messstrahls auf mindestens einer Detektorfläche eines ersten Detektors.

Wesentlich ist, dass in Verfahrensschritt B der Ausgangsstrahl zusätzlich in mindestens einen zweiten Referenzstrahl aufgeteilt wird und der zweite Referenzstrahl mit dem zumindest teilweise von dem Objekt mit einem gegenüber dem reflektierten Messstrahl zur Überlagerung auf dem ersten Detektor hier mit einem in einen anderen Winkelbereich an dem Objekt gestreuten Messstrahl auf mindestens einer Detektorfläche eines zweiten Detektors überlagert wird. Dieses in den anderen Winkelbereich gestreute Licht, welches auf der anderen Detektorfläche mit einem zweites Referenzstrahl überlagert wird, wird im folgenden Empfangslicht und der zugehörige optische Strahlenweg Empfangsstrahl genannt.

Das erfindungsgemäße Verfahren weist die vorgenannten Vorteile der erfindungsgemäßen Vorrichtung auf.

Die erfindungsgemäße Vorrichtung ist vorzugsweise ausgebildet zur Durchführung des erfindungsgemäßen Verfahrens bzw. einer vorzugsweise Ausführungsform hiervon. Das erfindungsgemäße Verfahren ist vorzugsweise zur Durchführung mittels einer erfindungsgemäßen Vorrichtung bzw. einer vorzugsweisen Ausführungsform hiervon ausgebildet.

Vorzugsweise werden mittels des ersten Detektors im Wesentlichen von dem Objekt reflektierte Anteile des Messstrahls, d. h. koaxial zur optischen Achse des Messstrahls reflektierte Lichtstrahlen bzw. Lichtstrahlenbündel gemessen. Demgegenüber werden mittels des zweiten Detektors gestreute Anteile des Messstrahls (der Empfangsstrahl), d. h. vorzugsweise Anteile, welche schräg, also nicht parallel, zur optischen Achse des Messstrahls stehen bzw. entsprechende Strahlenbündel gemessen.

Die Erfindung ist weiterhin in der Erkenntnis des Anmelders begründet, dass auch das gestreute Licht, welches unter einem schrägen Winkel beispielsweise von einem Objektiv eingesammelt und auf den zweiten Detektor abgebildet wird, bei einer bewegten Oberfläche des Objekts Doppler-Frequenz verschoben ist. Allerdings kann die bei den vorbekannten Vorrichtungen verwendete Methode zur Auswertung der Messsignale des Detektors hier nicht unverändert angewandt werden. Hingegen kann eine aus der Literatur bekannte, jedoch bisher nicht im Rahmen der erfindungsgemäßen Vorrichtung oder des erfindungsgemäßen Verfahrens verwendete Formel für den richtungsabhängigen Doppler-Effekt verwendet werden, um die Phasen- und/oder Frequenzverschiebung korrekt gemäß nachfolgender Formel 1 zu beschreiben:

$$\dot{\phi}_D = \frac{2\pi}{\lambda}\left(v_x \sin\beta_1 + v_x \sin\beta_2 + v_z \cos\beta_1 + v_z \cos\beta_2\right) \quad \text{(Formel 1)}$$

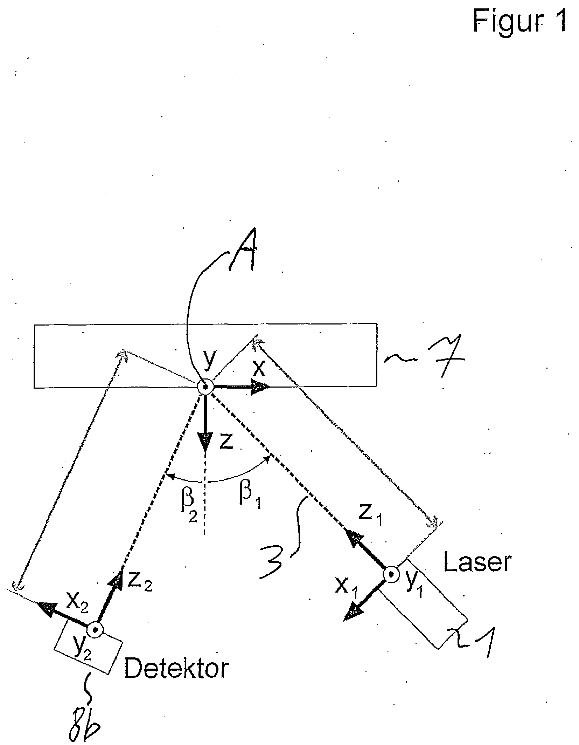

Die geometrischen Größen können aus der schematischen Darstellung gemäß Figur 1 entnommen werden. Die verbleibenden Größen sind wie folgt definiert : $v_x$ ist die Geschwindigkeit des Messobjekts in x-Richtung in [m/s], $v_z$ ist die Geschwindigkeit des Messobjekts in z-Richtung in [m/s], und $\dot{\phi}_D$ ist die Ableitung der Phase in [$2\pi$ rad/s].

Sofern der Messstrahl senkrecht im betrachteten Koordinatensystem einfällt, vereinfacht sich Formel 1 zu Formel 2:

$$\dot{\phi}_D = \frac{2\pi}{\lambda}\left(v_x \sin\beta_2 + v_z + v_z \cos\beta_2\right) \quad \text{(Formel 2)}$$

Vorzugsweise trifft aus den zuvor genannten Gründen der Messstrahl in etwa senkrecht auf die zu vermessende Fläche des Messobjekts auf.

Wie vorhergehend beschrieben, umfasst die erfindungsgemäße Vorrichtung vorzugsweise ein erstes Objektiv, welches im Strahlengang des Messstrahls und des ersten Referenzstrahls zwischen Objekt und erstem Detektor angeordnet ist.

Hierdurch kann insbesondere der Messstrahl auf einen Messpunkt auf dem Objekt fokussiert werden. Vorzugsweise weist das Objektiv eine numerische Apertur größer 0,05, bevorzugt größer 0,1, insbesondere bevorzugt größer gleich 0,2 auf. Hierdurch ergibt sich der Vorteil, dass dann gemäß Formel 0 sich ein kleiner Messfokus ergibt, der insbesondere bei einer vorzugsweise verwendeten grünen Wellenlänge deutlich unter 5 μm beträgt auch wenn die Apertur des Objektivs mit einem Gaußförmigen Strahl ausgeleuchtet wird. Da kein weiterer Laserstrahl auf die Messoberfläche trifft entspricht der Fokusdurchmesser des Messtrahls der Messpunktgröße des gesamten Systems. Durch den Umstand, dass nur ein Laserstrahl auf das Objekt trifft, wird ein extrem kleiner Messpunkt erreicht und optisches Übersprechen kann nicht auftreten. Diese wesentliche Erkenntnis hat zu dem Konzept dieser Erfindung geführt.

Weiterhin ist es vorteilhaft, dass das erste Objektiv ebenso im Strahlengang des Empfangsstrahls zwischen Objekt und zweitem Detektor angeordnet ist. Auf diese Weise ist somit lediglich ein Objektiv notwendig, um einerseits den reflektierten Messstrahl auf den ersten Detektor und andererseits den gestreuten Messstrahl (Empfangsstrahl) auf den zweiten Detektor abzubilden.

In einer weiteren vorzugsweisen Ausführungsform umfasst die Vorrichtung ein zweites Objektiv, welches im Strahlengang des Empfangsstrahls zwischen Objekt und zweitem Detektor angeordnet ist. Hierdurch kann somit durch das zweite Objektiv gezielt die optische Abbildung des gestreuten Messtrahls auf den zweiten Detektor gewählt werden. Insbesondere ist es vorteilhaft, dass die numerische Apertur des zweiten Objektivs kleiner 0,15, bevorzugt kleiner 0,1, weiter bevorzugt kleiner 0,06 ist. Die numerische Apertur kann kleiner gewählt werden, da die Messpunktgröße nicht durch die numerische Apertur des Empfangsstrahl beeinflusst wird. Hierdurch ergeben sich die Vorteile, dass ein kleinerer Detektionswinkel gewählt werden kann, der mindestens der Summe aus halben Öffnungswinkel des Messtrahls und dem halben Öffnungswinkel des Empfangsstrahl betragen muss. Des Weiteren führt dass zu einem größeren Überlappungsbereich in z-Richtung, was einem größeren Tiefenmessbereich entspricht.

In einer weiteren vorzugsweisen Ausführungsform ist die erfindungsgemäße Vorrichtung zur heterodynen Messung mittels des ersten Detektors ausgebildet, indem eine Vorrichtung zur Frequenzverschiebung zwischen Messstrahl und erstem Referenzstrahl vorgesehen ist, die sich vorzugsweise mit einem optischen Frequenzschieber, wie z.B. einer Bragg-Zelle erreichen lässt. Hierdurch lässt sich somit in an sich bekannter Weise auch die Bewegungsrichtung der vermessenden Oberfläche des Objekts ermitteln. Insbesondere ist es vorteilhaft, dass bei allen Referenzstrahlen jeweils zwischen Messstrahl und Referenzstrahl eine Frequenzverschiebevorrichtung vorgesehen ist, so dass der heterodyne Aufbau somit hinsichtlich aller Referenzstrahlen gegeben ist. Ein besonders einfacher Aufbau ergibt sich in der vorzugsweisen Ausgestaltung, in welcher lediglich der Messstrahl frequenzmoduliert wird, so dass der Messstrahl gegenüber allen Referenzstrahlen hinsichtlich der Frequenz verschoben ist und somit ein komplett heterodyner Aufbau hinsichtlich aller Detektoren vorliegt.

In einer weiteren vorzugsweisen Ausführungsform ist die Vorrichtung hinsichtlich der Strahlengänge von Messstrahl und erstem Referenzstrahl als konfokales Mikroskop ausgebildet. Hierdurch ergibt sich der Vorteil, dass nicht fokale Strahlen nicht auf den Detektor abgebildet werden. Ein typischer konfokaler Aufbau kann durch Vorsehen einer optischen Lochblende im Strahlengang von Messstrahl und erstem Referenzstrahl realisiert werden. Vorzugsweise wird der konfokale Aufbau durch Ausbildung des Detektors als optische Lochblende erzielt.

In einer weiteren vorzugsweisen Ausführungsform ist die Strahlteilervorrichtung ausgebildet zur Aufteilung des Ausgangsstrahls in einen Messstrahl, einen ersten Referenzstrahl, einen zweiten Referenzstrahl und mindestens einen dritten Referenzstrahl. Weiterhin umfasst die Vorrichtung mindestens einen dritten Detektor und Überlagerungsvorrichtung und dritter Detektor sind derart zusammenwirkend ausgebildet, dass der von dem Objekt zumindest teilweise gestreute Messstrahl und der dritte Referenzstrahl auf mindestens einer Detektorfläche des dritten Detektors überlagert sind. Hierdurch ist eine Vermessung einer Schwingung oder Auslenkung der Oberfläche des Objekts in drei Dimensionen möglich.

Insbesondere ist es vorteilhaft, dass die Vorrichtung derart ausgebildet ist, dass eine erste Ebene, welche durch den Messstrahl und den Empfangsstrahl definiert ist, mit einer zweiten Ebene, welche durch den Messstrahl und den dritten Referenzstrahl gebildet wird, einen Winkel größer 45 °, bevorzugt größer 85 ° einschließt. Hierdurch ist es gewährleistet, dass eine hinreichend genaue Auftrennung der Bewegungsinformation in drei Dimensionen möglich ist.

Vorzugsweise beträgt der Winkel zwischen Messstrahl und zumindest erstem Empfangsstrahl weniger als 40°, bevorzugt weniger als 30 °. Insbesondere ist es vorteilhaft, dass bei allen Empfangsstrahlen jeweils der Winkel zwischen Messstrahl und Empfangsstrahl kleiner 40°, bevorzugt kleiner 30 ° ist. Hierdurch ist ein hohes Signal-Rauschverhältnis, bei den Empfangsstrahlen und ein großer Tiefenmessbereich gewährleistet.

Vorzugsweise ist die Strahlungsquelle als longitudinal einmodiger Laser ausgebildet. Hierdurch ergibt sich der Vorteil, dass es zu keinen Störeffekten durch optische Mischeffekte zwischen den Moden kommt. Insbesondere ist es vorteilhaft, die Strahlungsquelle zusätzlich als transversal einmodigen Laser auszubilden, so dass sich weiterhin der Vorteil ergibt, dass sich der Messlaserstrahl optimal fokussieren lässt und ein minimaler Messpunktdurchmesser erreicht wird. Ein Laser mit einem $M^2$-Faktor kleiner 1,5 hat sich als ausreichend für eine gute Fokussierung erwiesen.

Untersuchungen des Anmelders haben gezeigt, dass insbesondere die Ausbildung der Strahlungsquelle als Laser mit einer Wellenlänge im sichtbaren Bereich, vorzugsweise als DPSS-Laser mit einer Wellenlänge von 532 nm vorteilhaft ist.

Um einen kleinen Messfleck zu erzielen ist es vorteilhaft, wenn alle Detektoren lediglich Licht des reflektierten oder gestreuten Messstrahls einer Messfläche auf dem Objekt mit einem Durchmesser kleiner 35 $\mu$m, insbesondere kleiner 15 $\mu$m, weiter bevorzugt kleiner 5 $\mu$m auswerten. Insbesondere sind die optischen Komponenten und hierbei beispielsweise ein oder mehrere Objektive der Vorrichtung vorzugsweise derart ausgebildet, dass ein Messbereich auf dem Objekt mit einem Durchmesser kleiner 35 $\mu$m, insbesondere kleiner 15 $\mu$m, weiter bevorzugt kleiner 5 $\mu$m auf die Messfläche der Detektoren abgebildet wird.

Das erfindungsgemäße Verfahren ist vorzugsweise derart ausgebildet, dass die Messsignale des ersten und des zweiten Detektors jeweils phasendemoduliert werden, so dass eine mehrdimensionale Auswertung der Auslenkung der Oberfläche des Objekts durchgeführt werden kann.

In einer weiteren vorzugsweisen Ausführungsform des erfindungsgemäßen Verfahrens werden die Messsignale des ersten Detektors phasendemoduliert, um eine Auslenkung der Oberfläche des Objekts durchzuführen und die Messsignale des zweiten Detektors werden amplitudendemoduliert, um eine Auswertung der Intensität des gestreuten Messstrahls durchzuführen. Hiermit kann somit in einfacher Weise sowohl die Auslenkung in Richtung der optischen Achse des Messstrahls sowie die Intensität des Streulichts mit bisher nicht erreichter Genauigkeit gemessen werden. Hierdurch ergibt sich eine Vielzahl neuer Anwendungsformen:

Insbesondere ist es möglich, Unebenheiten oder Einschlüsse von Fehlpartikein auf einer im wesentlichen glatten Oberfläche zu detektieren, indem einmal durch Relativbewegung des Messstrahls zur Oberfläche die Oberflächenänderung (im übertragenen Sinne die "Auslenkung") durch Phasendemodulation der Messsignale des ersten Detektors und darüber hinaus das durch die Fehlpartikel gestreute Licht mittels Amplitudendemodulation der Messsignale des zweiten Detektors ermittelt wird.

Vorzugsweise ist das erfindungsgemäße Verfahren daher derart ausgeführt, dass eine Oberflächentopografie des Objekts bestimmt wird, folgende Verfahrensschritte umfassend:

- Bewegen des Objekts relativ zu dem Messstrahl, vorzugsweise im Wesentlichen senkrecht zur optischen Achse des Messstrahls und

- Messen der Auslenkung mittels des ersten Detektors sowie Messen des Streulichts mittels des zweiten Detektors.

Weitere Merkmale und vorzugsweisen Ausführungsformen werden im Folgenden anhand von den Figuren und Ausführungsbeispielen beschrieben. Dabei zeigt:

Figur 1    eine schematische Darstellung eines typischen Aufbaus einer erfindungsgemäßen Vorrichtung zur Verdeutlichung der geometrischen Parameter der Formel 1, welche den richtungsabhängigen Doppler-Effekt beschreibt;

Figur 2    eine schematische Darstellung eines ersten Ausführungsbeispiels einer erfindungsgemäßen Vorrichtung;

Figur 3    die räumliche Anordnung von Lichtquelle und Detektoren des in Figur 2 dargestellten ersten Ausführungsbeispiels und

Figur 4    schematische Darstellungen der Strahlenverläufe bei Ausführungsbeispielen der erfindungsgemäßen Vorrichtung mit einem Objektiv (Teilbild A) und mit mehreren Objektiven (Teilbild B).

Figur 1 zeigt anhand des ersten Ausführungsbeispiels die geometrische Anordnung zur Anwendung der zuvor genannten Formel 1.

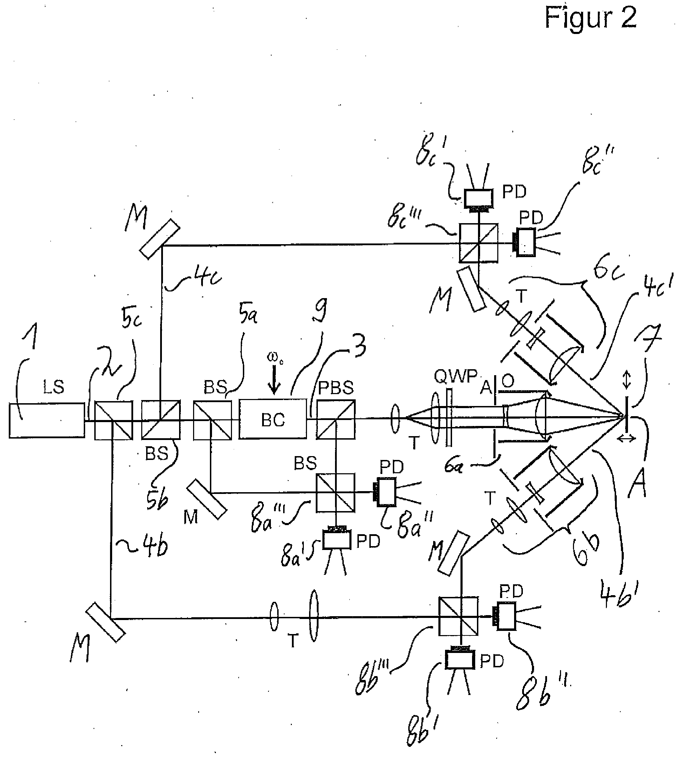

Zum einfacheren Verständnis wird daher zunächst das erste Ausführungsbeispiel anhand der schematischen Darstellung gemäß Figur 2 erläutert:

Bei dem ersten Ausführungsbeispiel ist eine Strahlungsquelle 1 als Laser mit einer Wellenlänge 532 nm ausgebildet. Ein Ausgangsstrahl 2, welche durch den Laser erzeugt wird, wird durch eine Strahlteilervorrichtung in einen Messstrahl 3 und einen ersten Referenzstrahl 4a, einen zweiten Referenzstrahl 4b und einen dritten Referenzstrahl 4c aufgeteilt.

Die Strahlteilervorrichtung umfasst hierfür mehrere Strahlteiler 5a, 5b und 5c. Der Messstrahl 3 wird über ein erstes Objektiv 6a auf einen Messpunkt A auf einem zu vermessenden Objekt 7 abgebildet. Der von der Oberfläche des Objekts 7 am Messpunkt A reflektierte Messstrahl tritt wiederum in den Strahlengang des ersten Objektivs 6a ein und wird über eine optische Überlagerungsvorrichtung auf einen ersten Detektor 8a abgebildet, welcher erster Detektor 8a zwei Fotodetektoren 8a' und 8a" umfasst. Die optische Überlagerungsvorrichtung umfasst Spiegel M, Polarisationsstrahlteiler PBS. Der Detektor umfasst zur Überlagerung der Strahlen auf den beiden Fotodetektoren 8a' und 8a" einen weiteren Strahlteiler 8a"'.

Der Aufbau des ersten Fotodetektors entspricht somit dem an sich bekannten Aufbau einer so genannten "balanced detector" Anordnung.

Mittels einer Lochblende A im Strahlengang des Messstrahls und ersten Referenzstrahls ist ein konfokaler Aufbau realisiert.

Weiterhin ist im Strahlengang des Messstrahls 3 eine als Braggzelle ausgebildete Frequenzschiebevorrichtung 9 angeordnet, um einen heterodynen Aufbau hinsichtlich des Messstrahls und aller Referenzstrahlen auszubilden. Alternativ kann die Frequenzschiebevorrichtung 9 im Strahlengang eines oder beider Referenzstrahlen angeordnet sein.

Der erste Messstrahl wird in an sich bekannter Weise über ein Teleskop T und Lambda Viertelplättchen QWP auf den Messpunkt A auf dem Objekt 7 abgebildet und entsprechend der wiedereingekoppelte reflektierte Messstrahl über diesen optischen Aufbau auf den ersten Detektor 8a abgebildet.

Die Vorrichtung gemäß Figur 2 umfasst weiterhin einen zweiten Detektor 8b, welcher analog zu dem ersten Detektor 8a zwei Fotodetektoren 8b' und 8b" sowie einen Strahlteiler 8b"' für eine balanced-detector-Anordnung aufweist. Der an dem Messpunkt A auf dem Objekt 7 gestreute Anteil des Messlichts wird als ersten Empfangsstrahl 4b' teilweise durch ein zweites Objektiv 6b eingesammelt und über Spiegel M und ein weiteres Teleskop T mit dem zweiten Referenzstrahl 4c auf dem zweiten Detektor 8b überlagert.

In analoger Weise ist ein drittes Objektiv 6c vorgesehen, welches in einen anderem Raumwinkel gestreute Anteile des an dem Punkt A des Objekts 7 gestreuten Messstrahls als zweiten Empfangsstrahl 4c' einsammelt und über Spiegel M auf einen dritten Detektor 8c abbildet, welcher dritte Detektor 8c im analogen Aufbau zwei Fotodetektoren 8c' und 8c" sowie einen Strahlteiler 8c"' aufweist. Auf den Messflächen der Fotodetektoren 8c' und 8c" wird in analoger Weise der von dem Objektiv 6c eingesammelte Streulichtanteil des Messstrahls mit dem dritten Referenzstrahl 4c überlagert.

Die Vorrichtung ist vorzugsweise derart angeordnet und ausgebildet, dass der Messstrahl 3 in etwa senkrecht zur Flächennormale des Objekts 7 an dem Messpunkt A auftrifft.

Der mittels des ersten Objektivs 6a erzeugte Messpunkt weist einen Durchmesser kleiner 5 $\mu$m auf.

Hierzu weist das erste Objektiv eine nummerische Apertur von etwa 0,2 auf. Die nummerischen Aperturen von zweitem und dritten Objektiv 6b und 6c betragen hingegen etwa 0,1.

Die drei Detektoren 8a, 8b und 8c sind mit einer (nicht dargestellten) Auswerteeinheit verbunden, die in an sich bekannter Weise ausgebildet ist, um Amplitudendemodulationen und/oder Phasendemodulationen der Messsignale der Fotodetektoren vorzunehmen.

Auf diese Weise ist es somit möglich, beispielsweise eine Bewegung des Messpunktes A auf der Oberfläche des Objekts 7 in drei Dimensionen zu vermessen. Hierbei ist es erstmals möglich, dies mit einem Messpunkt mit einem Durchmesser von 5 $\mu$m durchzuführen, ohne dass die bei dem Stand der Technik genannten Störeffekte auftreten.

Zur Auswertung der dreidimensionalen Schwingungsinformation wird der richtungsabhängige Doppler-Effekt berücksichtigt, vorzugsweise gemäß Formel 1.

Die Bedeutung der geometrischen Parameter aus Formel 1 sind in der schematischen Darstellung gemäß Figur 1 verdeutlicht:

Die als Laser ausgebildete Strahlungsquelle, deren Ausgangsstrahl in einen Messstrahl 3 und mehrere Referenzstrahlen aufgespalten wurde, ist angeordnet, so dass der Messstrahl 3 unter einem Winkel $\beta 1$ auf die Flächennormale des Objekts 7 an dem Messpunkt A auftritt. Die Flächennormale definiert darüber hinaus die xy-Ebene und die senkrecht hierzu stehende z-Achse.

Unter einem Winkel $\beta 2$ ist der zweite Detektor 8b angeordnet.

Wie bereits ausgeführt, zeigt Figur 2 eine schematische Darstellung eines Ausführungsbeispiels einer erfindungsgemäßen Vorrichtung, in welcher zur einfacheren Darstellung sämtliche Strahlengänge zweidimensional aufgetragen wurden.

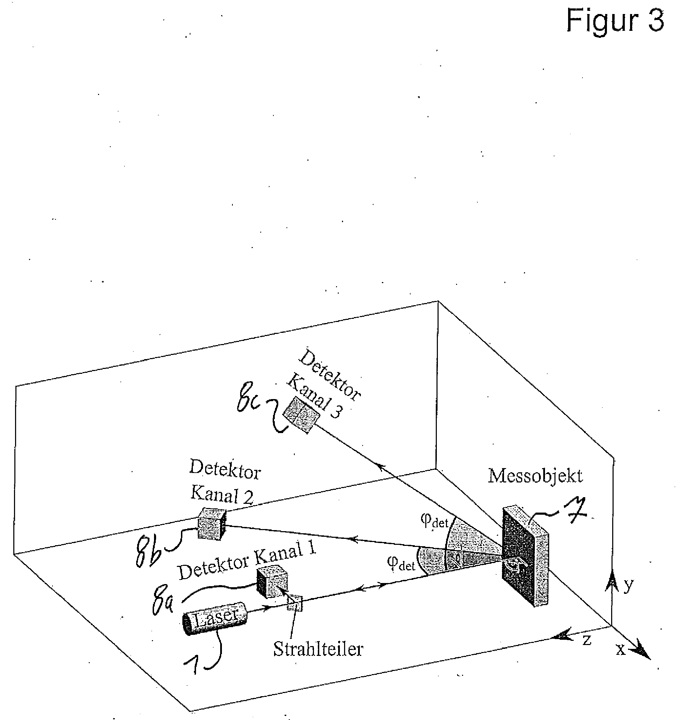

Figur 3 zeigt die tatsächlichen räumlichen Anordnungen von Strahlungsquelle 1, ersten Detektor 8a, zweiten Detektor 8b und dritten Detektor 8c in räumlicher Darstellung insbesondere hinsichtlich der durch die Flächennormale des Messobjekts 7 am Messpunkt A definierten x, y und z Koordinaten. Insbesondere sind die Winkel $\varphi$det eingezeichnet, welche vorzugsweise kleiner 40 ° sind.

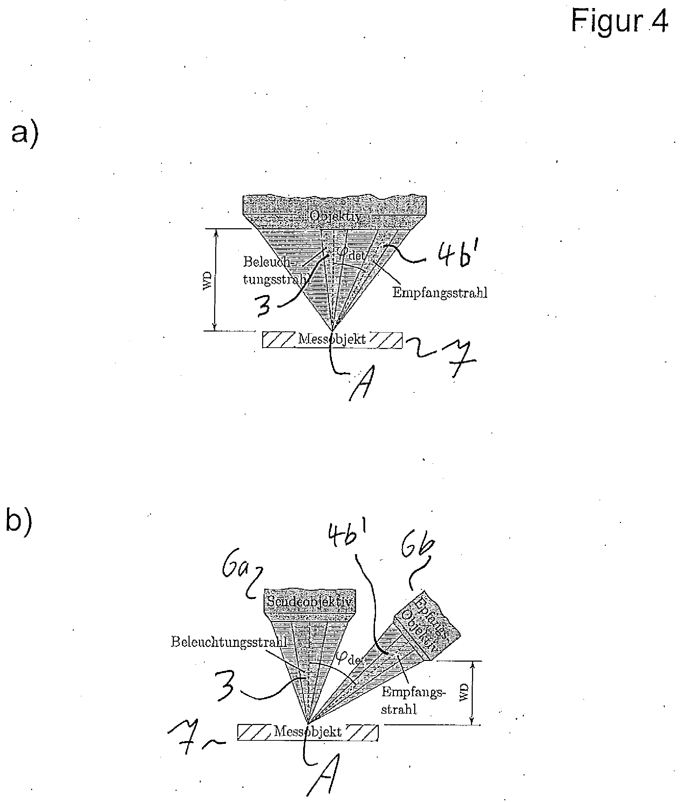

In Figur 4 sind zwei Teilausschnitte von Ausführungsbeispielen der erfindungsgemäßen Vorrichtung dargestellt:

In Teilbild A ist ein Ausführungsbeispiel dargestellt, bei dem mittels lediglich eines Objektivs sowohl Messstrahl 3 auf den Messpunkt A auf dem Messobjekt 7 abgebildet wird, als auch in einem schräg hierzu stehenden Raumwinkel φdet ein erster Referenzstrahl 4a von ein und demselben Objektiv über weitere optische Komponenten auf den zweiten Detektor abgebildet wird.

In Teilbild B ist hingegen ein Ausführungsbeispiel dargestellt, bei dem mittels eines ersten Objektivs 6a der Messstrahl 3 auf den Messpunkt A des Objekts 7 abgebildet wird und ein Streulichtanteil des Messstrahls 3 mittels eines zweiten Objektivs 6b und weitere optische Komponenten auf den zweiten Detektor 8b abgebildet wird.

## Patentansprüche

1. Vorrichtung zur interferometrischen Vermessung einer Objekts (7), umfassend eine Strahlungsquelle (1) zur Erzeugung eines Ausgangsstrahls (2), eine Strahlteilervorrichtung (5a, 5b, 5c) zur Aufteilung des Ausgangsstrahls in einen Messstrahl (3), einen ersten Referenzstrahl (4a) und mindestens einen zweiten Referenzstrahl (4b, 4c), eine optische Überlagerungsvorrichtung, einen ersten Detektor (8a) und mindestens einen zweiten Detektor (8b, 8c), wobei Überlagerungsvorrichtung und erster Detektor derart zusammenwirkend ausgestaltet sind, dass der von dem Objekt zumindest teilweise reflektierte Messstrahl und der erste Referenzstrahl auf mindestens einer Detektorfläche des ersten Detektors überlagert sind, und wobei Überlagerungsvorrichtung und zweiter Detektor (8b) derart zusammenwirkend ausgebildet sind, dass der von dem Objekt zumindest teilweise gestreute Messstrahl als erster Empfangsstrahl (4b') und der zweite Referenzstrahl auf mindestens einer Detektorfläche des zweiten Detektors überlagert sind, derart, dass mittels des ersten Detektors im Wesentlichen von dem Objekt reflektierte Anteile des Messstrahls und mittels des zweiten Detektors gestreute Anteile des Messstrahls auswertbar sind.

2. Vorrichtung nach Anspruch 1, wobei, die Vorrichtung ein erstes Objektiv umfasst, welches im Strahlengang des Messstrahls und des ersten Referenzstrahls zwischen Objekt und erstem Detektor angeordnet ist, vorzugsweise, dass die Numerische Apertur des Objektivs größer 0,1, vorzugsweise größer 0,15, bevorzugt größer gleich 0,2 ist.

3. Vorrichtung nach Anspruch 2, wobei das erste Objektiv weiterhin im Strahlengang des zweiten Referenzstrahls zwischen Objekt und zweitem Detektor angeordnet ist.

4. Vorrichtung nach Anspruch 3, wobei die Vorrichtung ein zweites Objektiv umfasst, welches im Strahlengang des zweiten Referenzstrahls zwischen Objekt und zweitem Detektor angeordnet ist, vorzugsweise, dass die Numerische Apertur des zweiten Objektivs kleiner 0,15, bevorzugt kleiner 0,1 ist.

5. Vorrichtung nach einem der vorangegangenen Ansprüche, wobei, die Vorrichtung zur heterodynen Messung mittels des ersten Detektors ausgebildet ist, indem eine Frequenzverschiebevorrichtung zur Frequenzverschiebung zwischen Messstrahl und erstem Referenzstrahl vorgesehen ist, vorzugsweise, dass eine Frequenzverschiebevorrichtung zur Frequenzverschiebung zwischen Messstrahl und allen Referenzstrahlen vorgesehen ist.

6. Vorrichtung nach einem der vorangegangenen Ansprüche, wobei, die Vorrichtung hinsichtlich der Strahlengänge von Messstrahl und erstem Referenzstrahl als konfokales Mikroskop ausgebildet ist.

7. Vorrichtung nach einem der vorangegangenen Ansprüche. wobei, die Strahlteilervorrichtung ausgebildet ist zur Aufteilung des Ausgangsstrahls in einen Messstrahl, einen ersten Referenzstrahl, einen zweiten Referenzstrahl und mindestens einen dritten Referenzstrahl, dass die Vorrichtung mindestens einen dritten Detektor aufweist und Überlagerungsvorrichtung und dritter Detektor derart zusammenwirkend ausgebildet sind, dass der von dem Objekt zumindest teilweise gestreute Messstrahl als zweiter Empfangsstrahl und der dritte Referenzstrahl auf mindestens einer Detektorfläche des dritten Detektors überlagert sind, vorzugsweise, dass die Vorrichtung derart ausgebildet ist, dass eine erste Ebene, welche durch den Messstrahl und den zweiten Referenzstrahl definiert ist mit einer zweiten Ebene, welche durch den Messstrahl und den dritten Referenzstrahl gebildet wird, einen Winkel größer 45°, bevorzugt größer 85° einschließt.

8. Vorrichtung nach einem der vorangegangenen Ansprüche, wobei, der Winkel zwischen Messstrahl und zumindest erstem Empfangsstrahl, vorzugsweise zwischen Messstrahl und allen Empfangsstrahlen jeweils kleiner 30° ist.

9. Vorrichtung nach einem der vorangegangenen Ansprüche, wobei, die Strahlungsquelle als longitudinal einmodiger Laser ausgebildet ist, vorzugsweise zusätzlich als transversal einmodiger Laser ausgebildet ist, insbesondere als Laser mit einem $M^2$-Faktor kleiner 1,5.

**10.** Vorrichtung nach einem der vorangegangenen Ansprüche, wobei, die Strahlungsquelle als Laser mit einer Wellenlänge im sichtbaren Bereich ausgebildet ist.

**11.** Vorrichtung nach Anspruch 10, wobei, die Strahlungsquelle als DPSS-Laser mit einer Wellenlänge von 532 nm ausgebildet ist.

**12.** Verfahren zur interferometrischen Vermessung eines Objekts (7), folgende Verfahrensschritte umfassend:

A Erzeugen eines Ausgangsstrahls (2) mittels einer Lichtquelle (1);
B Aufteilen des Ausgangsstrahls mittels einer Strahlteilervorrichtung (5a, 5b, 5c) in einen Messstrahl (3), einen ersten Referenzstrahl (4a) und mindestens einen zweiten Referenzstrahl (4b, 4c);
C Überlagern des ersten Referenzstrahls und des zumindest teilweise von dem Objekt reflektierten Messstrahls auf mindestens einer Detektorfläche eines ersten Detektors (8a), Überlagern des zweiten Referenzstrahls (4b) mit dem zumindest teilweise von dem Objekt gestreuten Messstrahl auf mindestens einer Detektorfläche eines zweiten Detektors,
D Auswerten von im Wesentlichen von dem Objekt reflektierten Anteilen des Messstrahls mittels des ersten Detektors und von gestreuten Anteilen des Messstrahls mittels des zweiten Detektors.

**13.** Verfahrens nach Anspruch 12, wobei, die Messsignale des ersten und des zweiten Detektors jeweils phasendemoduliert werden, für eine mehrdimensionale Auswertung einer Auslenkung der Oberfläche des Objekts.

**14.** Verfahrens nach einem der Ansprüche 12 bis 13, wobei die Messsignale des ersten Detektors phasendemoduliert werden, für eine Auswertung einer Auslenkung der Oberfläche des Objekts und dass die Messsignale des zweiten Detektors amplitudendemoduliert werden, für eine Auswertung der Intensität des gestreuten Messstrahls.

**15.** Verfahrens nach Anspruch 14, wobei eine Oberflächentopographie des Objekts bestimmt wird, folgende Verfahrensschritte umfassend:

- Bewegen des Objekts relativ zu dem Messstrahl, vorzugsweise im Wesentlichen senkrecht zur optischen Achse des Messstrahls und
- Messen der Auslenkung mittels des ersten Detektors sowie Messen des Streulichts mittels des zweiten Detektors.

**Claims**

**1.** Device for interferometric measurement of an object (7),
comprising a radiation source (1) for generating an output beam (2), a beam splitter device (5a, 5b, 5c) for splitting the output beam into a measuring beam (3), a first reference beam (4a) and at least one second reference beam (4b, 4c), an optical superimposition device, a first detector (8a) and at least one second detector (8b, 8c), wherein the superimposition device and the first detector are configured to co-operate in such a way that the measuring beam at least partly reflected by the object and the first reference beam are superimposed on at least one detector surface of the first detector,
and wherein
the superimposition device and the second detector (8b) are configured to co-operate in such a way that the measuring beam at least partly scattered by the object, as first received beam (4b'), and the second reference beam are superimposed on at least one detector surface of the second detector in such a way that, by means of the first detector, substantially portions of the measuring beam reflected by the object and, by means of the second detector, scattered portions of the measuring beam are analysable.

**2.** Device according to claim 1,
wherein
the device comprises a first objective which is arranged in the beam path of the measuring beam and the first reference beam between the objective and the first detector; preferably
the numerical aperture of the objective is greater than 0.1, preferably greater than 0.15, especially greater than or equal to 0.2.

**3.** Device according to claim 2,

wherein
the first objective is further arranged in the beam path of the second reference beam between the object and the second detector.

4. Device according to claim 3,
   wherein
   the device comprises a second objective which is arranged in the beam path of the second reference beam between the object and the second detector; preferably
   the numerical aperture of the second objective is less than 0.15, preferably less than 0.1.

5. Device according to any one of the preceding claims,
   wherein
   the device is configured for heterodyne measurement by means of the first detector by provision of a frequency shift device for frequency shifting between the measuring beam and the first reference beam; preferably
   a frequency shift device for frequency shifting is provided between the measuring beam and all reference beams.

6. Device according to any one of the preceding claims,
   wherein
   the device is configured as a confocal microscope in respect of the beam paths of the measuring beam and the first reference beam.

7. Device according to any one of the preceding claims,
   wherein
   the beam splitter device is configured for splitting the output beam into a measuring beam, a first reference beam, a second reference beam and at least one third reference beam;
   the device has at least one third detector and the superimposition device and the third detector are configured to co-operate in such a way that the measuring beam at least partly scattered by the object, as second received beam, and the third reference beam are superimposed on at least one detector surface of the third detector; preferably, the device is configured in such a way that a first plane, which is defined by the measuring beam and the second reference beam, encloses with a second plane, which is formed by the measuring beam and the third reference beam, an angle greater than 45°, preferably greater than 85°.

8. Device according to any one of the preceding claims,
   wherein
   the angle between the measuring beam and at least the first received beam, preferably between the measuring beam and all received beams, is in each case smaller than 30°.

9. Device according to any one of the preceding claims,
   wherein
   the radiation source is in the form of a longitudinally single-mode laser;
   preferably is additionally in the form of a transversely single-mode laser, especially in the form of a laser having an $M^2$ factor smaller than 1.5.

10. Device according to any one of the preceding claims,
    wherein
    the radiation source is in the form of a laser having a wavelength in the visible range.

11. Device according to claim 10,
    wherein
    the radiation source is in the form of a DPSS laser having a wavelength of 532 nm.

12. Method for interferometric measurement of an object (7), comprising the following method steps:

    A generation of an output beam (2) by means of a light source (1);
    B splitting of the output beam by means of a beam splitter device (5a, 5b, 5c) into a measuring beam (3), a first reference beam (4a) and at least one second reference beam (4b, 4c);
    C superimposition of the first reference beam and the measuring beam at least partly reflected by the object on at least one detector surface of a first detector (8a); superimposition of the second reference beam (4b) with the measuring beam at least partly scattered by the object on at least one detector surface of a second detector;
D analysis of substantially portions of the measuring beam reflected by the object by means of the first detector and of scattered portions of the measuring beam by means of the second detector.

13. Method according to claim 12,
wherein
the measuring signals of the first and second detectors are each phase-demodulated for a multi-dimensional analysis of a displacement of the surface of the object.

14. Method according to either one of claims 12 and 13,
wherein
the measuring signals of the first detector are phase-demodulated for analysis of a displacement of the surface of the object; and the measuring signals of the second detector are amplitude-demodulated for analysis of the intensity of the scattered measuring beam.

15. Method according to claim 14,
wherein
a surface topography of the object is determined, having the following method steps:

- movement of the object relative to the measuring beam, preferably substantially perpendicular to the optical axis of the measuring beam, and
- measurement of the displacement by means of the first detector and measurement of the scattered light by means of the second detector.

**Revendications**

1. Dispositif pour la mesure interférométrique d'un objet (7), comprenant une source de rayonnement (1) pour produire un faisceau de sortie (2), un dispositif diviseur de faisceau (5a, 5b, 5c) pour diviser le faisceau de sortie en un faisceau de mesure (3), un premier faisceau de référence (4a) et au moins un deuxième faisceau de référence (4b, 4c), un dispositif de superposition optique, un premier détecteur (8a) et au moins un deuxième détecteur (8b, 8c), le dispositif de superposition et le premier détecteur étant conçus pour coopérer de telle façon que le faisceau de mesure au moins partiellement réfléchi par l'objet et le premier faisceau de référence soient superposés sur au moins une surface de détection du premier détecteur,
et le dispositif de superposition et le deuxième détecteur (8b) étant conçus pour coopérer de telle façon que le faisceau de mesure au moins partiellement dispersé par l'objet en tant que premier faisceau de réception (4b') et le deuxième faisceau de référence soient superposés sur au moins une surface de détection du deuxième détecteur, de sorte que le premier détecteur permet d'évaluer des parties du faisceau de mesure essentiellement réfléchies par l'objet et le deuxième détecteur des parties dispersées du faisceau de mesure.

2. Dispositif selon la revendication 1,
dans lequel
le dispositif comprend un premier objectif qui est disposé dans le chemin optique du faisceau de mesure et du premier faisceau de référence entre l'objet et le premier détecteur, de préférence
l'ouverture numérique de l'objectif étant supérieure à 0,1, de préférence supérieure à 0,15, préférentiellement supérieure ou égale à 0,2.

3. Dispositif selon la revendication 2,
dans lequel
le premier objectif est également disposé dans le chemin optique du deuxième faisceau de référence entre l'objet et le deuxième détecteur.

4. Dispositif selon la revendication 3,
dans lequel
le dispositif comprend un deuxième objectif qui est disposé dans le chemin optique du deuxième faisceau de référence entre l'objet et le deuxième détecteur, de préférence
l'ouverture numérique du deuxième objectif étant inférieure à 0,15, préférentiellement inférieure à 0,1.

**5.** Dispositif selon l'une des revendications précédentes, dans lequel

le dispositif est conçu pour la mesure hétérodyne au moyen du premier détecteur, un dispositif de décalage de fréquence pour décaler la fréquence entre faisceau de mesure et premier faisceau de référence étant prévu, de préférence un dispositif de décalage de fréquence pour décaler la fréquence entre faisceau de mesure et tous les faisceaux de référence étant prévu.

**6.** Dispositif selon l'une des revendications précédentes, dans lequel

le dispositif est réalisé sous la forme d'un microscope confocal en ce qui concerne les chemins optiques du faisceau de mesure et du premier faisceau de référence.

**7.** Dispositif selon l'une des revendications précédentes, dans lequel

le dispositif diviseur de faisceau est conçu pour diviser le faisceau de sortie en un faisceau de mesure, un premier faisceau de référence, un deuxième faisceau de référence et au moins un troisième faisceau de référence, le dispositif présentant au moins un troisième détecteur, le dispositif de superposition et le troisième détecteur étant conçus pour coopérer de telle façon que le faisceau de mesure au moins partiellement dispersé par l'objet en tant que deuxième faisceau de réception et le troisième faisceau de référence soient superposés sur au moins une surface de détection du troisième détecteur, de préférence le dispositif étant conçu de telle façon qu'un premier plan qui est défini par le faisceau de mesure et le deuxième faisceau de référence fasse avec un deuxième plan qui est formé par le faisceau de mesure et le troisième faisceau de référence un angle supérieur à 45°, de préférence supérieur à 85°.

**8.** Dispositif selon l'une des revendications précédentes, dans lequel

l'angle entre le faisceau de mesure et au moins le premier faisceau de réception, de préférence entre le faisceau de mesure et tous les faisceaux de réception, est chaque fois inférieur à 30°.

**9.** Dispositif selon l'une des revendications précédentes, dans lequel

la source de rayonnement est réalisée sous la forme d'un laser monomode longitudinal, de préférence réalisée en plus comme laser monomode transversal, en particulier comme laser avec un facteur $M^2$ inférieur à 1,5.

**10.** Dispositif selon l'une des revendications précédentes, dans lequel

la source de rayonnement est réalisée sous la forme d'un laser avec une longueur d'onde dans le domaine visible.

**11.** Dispositif selon la revendication 10, dans lequel

la source de rayonnement est réalisée sous la forme d'un laser DPSS avec une longueur d'onde de 532 nm.

**12.** Procédé pour la mesure interférométrique d'un objet (7), comprenant les étapes suivantes :

A production d'un faisceau de sortie (2) au moyen d'une source de lumière (1) ;
B division du faisceau de sortie au moyen d'un dispositif diviseur de faisceau (5a, 5b, 5c) en un faisceau de mesure (3), un premier faisceau de référence (4a) et au moins un deuxième faisceau de référence (4b, 4c) ;
C superposition du premier faisceau de référence et du faisceau de mesure au moins partiellement réfléchi par l'objet sur au moins une surface de détection d'un premier détecteur (8a) ;
superposition du deuxième faisceau de référence (4b) avec le faisceau de mesure au moins partiellement dispersé par l'objet sur au moins une surface de détection d'un deuxième détecteur,
D évaluation des parties du faisceau de mesure essentiellement réfléchies par l'objet au moyen du premier détecteur et des parties dispersées du faisceau de mesure au moyen du deuxième détecteur.

**13.** Procédé selon la revendication 12, selon lequel

les signaux de mesure du premier et du deuxième détecteur sont chaque fois démodulés en phase pour une évaluation multidimensionnelle d'une déviation de la surface de l'objet.

14. Procédé selon l'une des revendications 12 à 13,
selon lequel
les signaux de mesure du premier détecteur sont démodulés en phase pour une évaluation d'une déviation de la surface de l'objet et les signaux de mesure du deuxième détecteur sont démodulés en amplitude pour une évaluation de l'intensité du faisceau de mesure dispersé.

15. Procédé selon la revendication 14,
selon lequel
une topographie superficielle de l'objet est déterminée, le procédé comprenant les étapes suivantes :

- déplacement de l'objet par rapport au faisceau de mesure, de préférence essentiellement perpendiculairement à l'axe optique du faisceau de mesure, et
- mesure de la déviation au moyen du premier détecteur ainsi que mesure de la lumière dispersée au moyen du deuxième détecteur.

# Figur 1

# Figur 2

# Figur 3

Figur 4

a)

b)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050237533 A

**In der Beschreibung aufgeführte Nicht-Patentliteratur**

- **Y.FU et al.** Cross-talk prevention in optical dynamic measurement. *Optics and Lasers in Engineering,* 2012, vol. 50, 54-555